(19) **Europäisches Patentamt / European Patent Office / Office européen des brevets**

(11) **EP 4 753 195 A1**

(12) **EUROPEAN PATENT APPLICATION**
published in accordance with Art. 153(4) EPC

(43) Date of publication:
**03.06.2026 Bulletin 2026/23**

(21) Application number: **23950238.8**

(22) Date of filing: **31.08.2023**

(51) International Patent Classification (IPC):
**H04L 5/00** (2006.01)   **H04W 72/23** (2023.01)

(52) Cooperative Patent Classification (CPC):
**H04L 5/00; H04W 72/23**

(86) International application number:
**PCT/CN2023/116320**

(87) International publication number:
**WO 2025/043656 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD. Shenzhen 518129 (CN)**

(72) Inventors:
• **QU, Huiyang**
  **Shenzhen, Guangdong 518129 (CN)**
• **HUANG, Huang**
  **Shenzhen, Guangdong 518129 (CN)**

(74) Representative: **Pfenning, Meinig & Partner mbB Patent- und Rechtsanwälte Theresienhöhe 11a 80339 München (DE)**

(54) **SIGNAL TRANSMISSION METHOD AND APPARATUS**

(57) This application provides a signal transmission method and an apparatus. The method includes: sending indication information to a first device, where the indication information indicates a DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and receiving a DMRS transmitted through the DMRS port set, where a resource occupied by the DMRS transmitted on each DMRS port in the DMRS port set is determined based on the code division manner for the DMRS port and the DMRS port. The code division manner for the DMRS port is indicated, so that the first device sends a DMRS in different code division manners in different scenarios, and DMRS transmission can be more flexible. This is applicable to more application scenarios.

Second device — First device

Step 501: The second device sends indication information to the first device

Indication information →

Step 502: The first device sends a DMRS through a DMRS port set

← DMRS

FIG. 5

EP 4 753 195 A1

**Description**

TECHNICAL FIELD

This application relates to the field of communication technologies, and in particular, to a signal transmission method and an apparatus.

BACKGROUND

In a wireless communication system, for example, a new radio (new radio, NR) system, a demodulation reference signal (demodulation reference signal, DMRS) may be used to estimate an equivalent channel matrix of a data channel (for example, a physical downlink shared channel (physical downlink shared channel, PDSCH)) or a control channel (for example, a physical downlink control channel (physical downlink control channel, PDCCH)) for data detection and demodulation.

In the NR system, a maximum quantity of DMRS ports (port) supported by the DMRS is 12. To ensure that DMRSs on a plurality of DMRS ports are orthogonal, frequency division, time division, and code division are used, so that the DMRSs on the plurality of DMRS ports are independent of each other, and have minimum mutual interference.

As wireless communication devices are deployed more densely in the future, a quantity of terminal devices further increases, and a requirement for an uplink capacity is increasingly high. An existing DMRS transmission solution cannot satisfy a requirement.

SUMMARY

This application provides a signal transmission method and an apparatus, to provide a DMRS transmission solution.

According to a first aspect, an embodiment of this application provides a signal transmission method. The method may be performed by a second device. The second device is a terminal device or a module (for example, a chip) used in a terminal device, or the second device is a network device or a module (for example, a chip) used in a network device. The method includes: sending indication information to a first device, where the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and receiving a DMRS transmitted through the DMRS port set, where a resource occupied by the DMRS transmitted on each DMRS port in the DMRS port set is determined based on the code division manner for the DMRS port and the DMRS port.

According to a second aspect, an embodiment of this application provides a signal transmission method. The method may be performed by a first device. The first device is a terminal device or a module (for example, a chip) used in a terminal device, or the first device is a network device or a module (for example, a chip) used in a network device. The method includes: receiving indication information from a second device, where the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and sending a DMRS through the DMRS port set, where a resource occupied by the DMRS transmitted on each DMRS port in the DMRS port set is determined based on the code division manner for the DMRS port and the DMRS port.

According to the foregoing method, the second device may indicate the code division manner for the DMRS port to the first device, so that the first device can send a DMRS in different code division manners in different scenarios, and DMRS transmission can be more flexible. This is applicable to more application scenarios.

With reference to the first aspect or the second aspect, in a possible implementation, the code division manner for the DMRS port indicates a correspondence between the DMRS port and at least one of the following parameters: a code division multiplexing CDM group index, a subcarrier offest, a frequency domain orthogonal cover code (orthogonal cover code, OCC) code, and a time domain OCC code; and that the resource occupied by the DMRS transmitted on each DMRS port in the DMRS port set is determined based on the code division manner for the DMRS port and the DMRS port includes: The resource for the DMRS transmitted on the DMRS port is determined based on the DMRS port and the correspondence.

With reference to the first aspect or the second aspect, in a possible implementation, for a first DMRS port in the DMRS port set, the code division manner corresponding to the first DMRS port is code division on different symbols on a same subcarrier, and an index k of a subcarrier included in a resource occupied by the DMRS transmitted on the first DMRS port satisfies the following form:

$$k = \left(\frac{X}{L}\right) n\Delta + \frac{X}{L \times S} \Delta k' + \Delta r.$$

An index *l* of an orthogonal frequency division multiplexing OFDM symbol included in the resource occupied by the DMRS transmitted on the first DMRS port is equal to *l'*.

*l'* = 0,1,2,.. *L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; S is a length of a frequency domain OCC used for the DMRS; and k'=0, 1, ..., S-1.

With reference to the first aspect or the second aspect, in a possible implementation, for a first DMRS port in the DMRS port set, the code division manner corresponding to the first DMRS port is code division on a plurality of subcarriers on a plurality of symbols, and an index k of a subcarrier included in a resource occupied by the DMRS transmitted on the first DMRS port satisfies the following form:

$$k = \left(\frac{X}{L}\right) n\Delta + \frac{X}{S} \Delta k' + \Delta r.$$

An index *l* of an OFDM symbol included in the resource occupied by the DMRS transmitted on the first DMRS port is equal to *l'*.

*l'* = 0,1,2,.. *L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; S is a length of a frequency domain OCC used for the DMRS; and k'=0, 1, ..., S-1.

With reference to the first aspect or the second aspect, in a possible implementation, for a first DMRS port in the DMRS port set, the code division manner corresponding to the first DMRS port is code division neither on a subcarrier nor on a symbol or code division on different subcarriers on a same symbol, and an index k of a subcarrier included in a resource occupied by the DMRS transmitted on the first DMRS port satisfies the following form:

$$k = \left(\frac{X}{L}\right) n\Delta + \Delta k'.$$

An index *l* of an OFDM symbol included in the resource occupied by the DMRS transmitted on the first DMRS port is equal to *l'*. *l'* = 0,1,2,.. *L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; and k'=0, 1, ..., S-1.

With reference to the first aspect or the second aspect, in a possible implementation, at least one of L, Δ, X, and S is predefined or configured by a network device.

Further, the quantity X of DMRS ports that can be used to transmit a DMRS may be configured. Therefore, when an uplink capacity during communication is relatively large, a value of X may be configured to be greater than 12, so that a channel capacity of a communication system can be increased. Further, in this application, the subcarrier offest Δ may also be configured based on an actual situation. When the subcarrier offset Δ is relatively large, for example, when the subcarrier offset Δ is greater than 5, a requirement in a high-speed movement scenario can be satisfied, inter-subcarrier interference between different DMRSs can be avoided, and anti-interference performance of the DMRS can be improved.

According to a third aspect, this application further provides a communication apparatus. The communication apparatus can implement any method provided in either of the first aspect and the second aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the first device or the second device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal apparatus or a network device.

In a possible implementation, the communication apparatus includes corresponding functional modules configured to implement the steps in the foregoing method. The function may be implemented by hardware, or may be implemented by executing corresponding software by hardware. The hardware or the software includes one or more modules corresponding to the foregoing function.

In a possible implementation, a structure of the communication apparatus includes a processing unit and a communication unit. These units may perform corresponding functions in the foregoing method examples. For details, refer to descriptions in the method provided in either of the first aspect and the second aspect. Details are not described herein.

According to a fourth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of either of the first aspect and the second aspect by using a logic circuit or by executing code instructions.

According to a fifth aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement functional modules for the method according to any possible implementation of either of the first aspect and the second aspect by using a logic circuit or by executing code instructions.

According to a sixth aspect, a communication apparatus is provided, including modules configured to perform the method according to any possible implementation of either of the first aspect and the second aspect.

According to a seventh aspect, a computer-readable storage medium is provided. The computer-readable storage medium stores a computer program or instructions. When the computer program or the instructions are executed by a processor, the method according to any possible implementation of either of the first aspect and the second aspect is implemented.

According to an eighth aspect, a computer program product storing instructions is provided. When the instructions are run by a processor, the method according to any possible implementation of either of the first aspect and the second aspect is implemented.

According to a ninth aspect, a circuit is provided. The circuit is configured to perform the method according to any possible implementation of either of the first aspect and the second aspect, and the circuit may include a chip circuit. Optionally, the circuit may be further coupled to a memory.

According to a tenth aspect, a chip is provided. The chip includes a processor, configured to implement the method according to any possible implementation of either of the first aspect and the second aspect. Optionally, the chip may further include a memory. The chip may include a chip, or may include a chip and another discrete component.

According to an eleventh aspect, a communication apparatus is provided, including a processor. The processor is configured to execute a computer program or instructions, so that the communication apparatus performs the method according to any possible implementation of either of the first aspect and the second aspect. Optionally, the communication apparatus may further include a memory, and the memory stores the foregoing computer program or instructions.

According to a twelfth aspect, an embodiment of this application provides a communication system. The communication system may include a first device and a second device, the first device is configured to implement the method in any possible design of the second aspect, and the second device is configured to implement the method in any possible design of the first aspect.

BRIEF DESCRIPTION OF DRAWINGS

FIG. 1 is a diagram of a network architecture according to an embodiment of this application;
FIG. 2 is a diagram of a structure of a network device according to an embodiment of this application;
FIG. 3 is a diagram of DMRS resource mapping according to an embodiment of this application;
FIG. 4 is a diagram of DMRS resource mapping according to an embodiment of this application;
FIG. 5 is a schematic flowchart of a signal transmission method according to an embodiment of this application;
FIG. 6 is a diagram of a structure of a communication apparatus according to an embodiment of this application;
FIG. 7 is a diagram of a structure of a communication apparatus according to an embodiment of this application; and
FIG. 8 is a diagram of a structure of a communication apparatus according to an embodiment of this application.

DESCRIPTION OF EMBODIMENTS

The following describes in detail embodiments of this application with reference to the accompanying drawings of the specification.

A method provided in embodiments of this application may be applied to a 4th generation (4th generation, 4G) communication system (for example, a long term evolution (long term evolution, LTE) system), a 5th generation (5th generation, 5G) communication system (for example, an NR system), or various future communication systems, for example, a 6th generation (6th generation, 6G) communication system. The method provided in embodiments of this application may be further applied to the fields of vehicle-to-everything (vehicle-to-everything, V2X) communication, the internet of vehicles, autonomous driving, assisted driving, and the like.

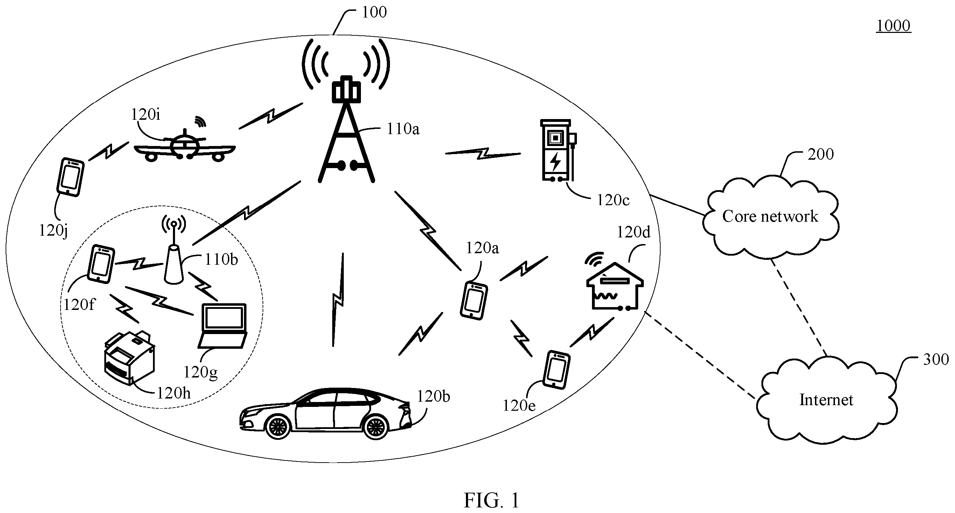

FIG. 1 is a diagram of an architecture of a communication system to which an embodiment of this application is applied. The communication system 1000 shown in FIG. 1 includes a radio access network 100 and a core network 200. Optionally, the communication system 1000 further includes an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless or wired manner. A core network device and the network device may be different physical devices independent of each other; functions of the core network device and logical functions of the network device may be integrated into a same physical device; or some functions of the core network device and some functions of the network device may be integrated into one physical device. Terminal devices may be connected to each other and network devices may be connected to each other in a wired or wireless manner. FIG. 1 is merely an example diagram. The communication system may further include other network devices, for example, may further include a wireless relay device and a wireless backhaul device, which are not shown in FIG. 1.

The network device is an access device for the terminal device to access the communication system in a wired or wireless manner. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a wireless fidelity (wireless fidelity, Wi-Fi) system, or the like, or may be a module or unit that completes some functions of the base station, for example, may be a central unit (central unit, CU), or may be a distributed unit (distributed unit, DU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. Neither of a specific technology and a specific device form used by the network device is limited in embodiments of this application.

The terminal device is a device having wireless sending and receiving functions, and may send a signal to a network device, or receive a signal from a network device. The terminal device includes but is not limited to a terminal apparatus, a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal device may be specifically a mobile phone, a tablet computer, a computer with wireless sending and receiving functions, a wearable device, a vehicle, an airplane, a ship, a robot, a robot arm, a smart home device, or the like. Neither of a specific technology and a specific device form used by the terminal device is limited in embodiments of this application.

The network device and the terminal device may be at fixed locations, or may be movable. The network device and the terminal device may be deployed on land, including an indoor or outdoor device, a handheld device, or a vehicle-mounted device; or may be deployed on a water surface; or may be deployed on a plane, a balloon, or an artificial satellite. Application scenarios of the network device and the terminal device are not limited in embodiments of this application.

Roles of the network device and the terminal device may be relative. For example, the helicopter or uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 1 may be referred to as communication apparatuses having a function of a network device, and 120a to 120j in FIG. 1 may be referred to as communication apparatuses having a function of a terminal device.

In embodiments of this application, the function of the network device may alternatively be performed by a module (for example, a chip) in the network device, or may be performed by a control subsystem including the function of the network device. The control subsystem including the function of the network device herein may be a control center in the foregoing application scenarios such as smart grid, industrial control, smart transportation, and smart city. The function of the terminal device may alternatively be performed by a module (for example, a chip or a modem) in the terminal device, or may be performed by an apparatus including the function of the terminal device.

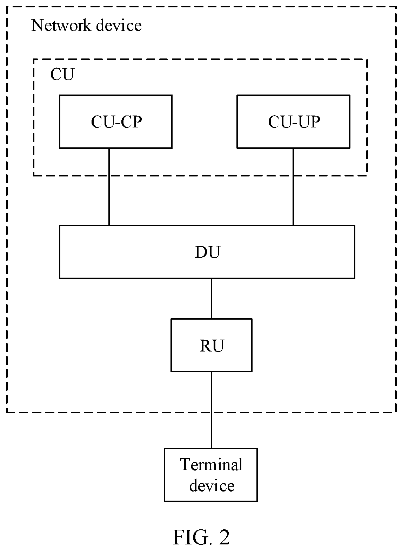

FIG. 2 is a diagram of a network device. As shown in FIG. 2, the network device includes one or more CUs, one or more DUs, and one or more radio units (radio unit, RU). For clarity, FIG. 2 shows only one CU, one DU, and one RU. The CU is configured to connect to a core network and the one or more DUs. Optionally, the CU may have some functions of the core network. The CU may include a CU-control plane (control plane, CP) and a CU-user plane (user plane, UP).

The CU and the DU may be configured based on protocol layer functions of a wireless network that are implemented by the CU and the DU. For example, the CU is configured to implement functions of a packet data convergence protocol (packet data convergence protocol, PDCP) layer and an upper protocol layer (for example, a radio resource control (radio resource control, RRC) layer and/or a service data adaptation protocol (service data adaptation protocol, SDAP) layer). The DU is configured to implement a function of a protocol layer (for example, a radio link control (radio link control, RLC) layer, a medium access control (medium access control, MAC) layer, and/or a physical (physical, PHY) layer) below the PDCP layer. For another example, the CU is configured to implement a function of a protocol layer (for example, an RRC layer and/or an SDAP layer) above a PDCP layer, and the DU is configured to implement functions of the PDCP layer and a lower protocol layer (for example, an RLC layer, a MAC layer, and/or a PHY layer).

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, the functions of the CU or the DU may be divided based on service types or other system requirements. For example, division may be performed based on latencies. Functions whose processing time needs to satisfy a low-latency requirement are set on the DU, and functions whose processing time does not need to satisfy the latency requirement are set on the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

In an NR system, a DMRS may be used for channel estimation, and estimated channel information is used for data demodulation. The DMRS may occupy at least one orthogonal frequency division multiplexing (orthogonal frequency division multiplexing, OFDM) symbol in time domain, and bandwidth occupied in frequency domain is the same as scheduled bandwidth of a scheduled data signal. A plurality of DMRS symbols corresponding to one DMRS port correspond to one DMRS base sequence, and one DMRS base sequence includes a plurality of DMRS base sequence elements. Using the DMRS base sequence corresponding to the DMRS port as an example, an $n^{th}$ element in the DMRS base sequence may be generated according to the following formula:

A DMRS base sequence r(n) generated based on a gold sequence may satisfy the following formula:

$$r(n) = \frac{1}{\sqrt{2}}\big(1 - 2 \cdot c(2n)\big) + j\frac{1}{\sqrt{2}}\big(1 - 2 \cdot c(2n+1)\big) \qquad (1)$$

$c(n)$ is a pseudo-random sequence, and a generation formula is:

$$c(n) = \big(x_1(n + N_C) + x_2(n + N_C)\big)\bmod 2$$
$$x_1(n + 31) = \big(x_1(n + 3) + x_1(n)\big)\bmod 2 \qquad (2)$$
$$x_2(n + 31) = \big(x_2(n + 3) + x_2(n + 2) + x_2(n + 1) + x_2(n)\big)\bmod 2$$

$N_C$ = 1600, $x_1(n)$ may be initialized as $x_1(0)=1, x_1(n)=0, n=1,2,...,30$, and initialization of $x_2(n)$ satisfies: $c_{\text{init}} = \sum_{i=0}^{30} x_2(i) \cdot 2^i$. A specific definition of $c_{\text{init}}$ is not limited in this application, and details are not described herein again.

The NR system supports two DMRS configuration types (configuration type): a DMRS configuration type 1 and a DMRS configuration type 2. Single front-loaded (Front-loaded) symbol and double front-loaded symbol are further distinguished for a DMRS. The DMRS configuration type 1 and a single front-loaded symbol support a maximum of four DMRS ports. The DMRS configuration type 1 and double front-loaded symbols support a maximum of eight DMRS ports. The DMRS configuration type 2 and a single front-loaded symbol support a maximum of six DMRS ports. The DMRS configuration type 2 and double front-loaded symbols support a maximum of 12 DMRS ports.

For example, for a DMRS port $p$, an $m^{th}$ element $r(m)$ in a corresponding DMRS base sequence is mapped to a resource element (resource element, RE) whose index is $(k,l)_{p,\mu}$ according to the following rule: The RE whose index is $(k,l)_{p,\mu}$ corresponds to an OFDM symbol whose index is $l$ in a slot in time domain, and corresponds to a subcarrier whose index is $k$ in frequency domain. The mapping rule may satisfy the following form:

$$a_{k,l}^{(p,\mu)} = \beta_{PDSCH}^{DMRS} w_{\mathrm{f}}(k') w_{\mathrm{t}}(l') r(2n+k')$$

$$k = \begin{cases} 4n + 2k' + \Delta \\ 6n + k' + \Delta \end{cases} ;$$

$$k' = 0,1;$$

$$l = \overline{l} + l';$$

$$n = 0,1,...;$$

$$l' = 0,1;$$

(3)

$p$ is an index of a DMRS port, $\overline{l}$ is a symbol index of a start OFDM symbol occupied by a DMRS modulation symbol or a symbol index of a reference OFDM symbol, $w_f(k')$ is a frequency domain cover code sequence element corresponding to a subcarrier whose index is $k'$, and $w_t(l')$ is a time domain cover code sequence element corresponding to an OFDM symbol whose index is $l'$. $\mu$ represents a subcarrier spacing parameter, $\beta_{PDSCH}^{DMRS}$ is a power scaling factor, $m = 2n + k'$, and $\Delta$ is a subcarrier offest.

For the DMRS configuration type 1, values of $w_f(k')$, $w_t(l')$, and $\Delta$ corresponding to the DMRS port $p$ may be determined according to Table 1.

Table 1

| $p$ | $\lambda$ | $\Delta$ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

It should be understood that Table 1 is merely used as an example for description. This is not limited.

For the DMRS configuration type 2, values of $w_f(k')$, $w_t(l')$, and $\Delta$ corresponding to the DMRS port $p$ may be determined according to Table 2.

Table 2

| $p$ | $\lambda$ | $\Delta$ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |

(continued)

| p | $\lambda$ | $\Delta$ | $w_f(k')$ | | $w_t(l')$ | |
|---|---|---|---|---|---|---|
| | | | k'=0 | k'=1 | l'=0 | l'=1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

It should be understood that Table 2 is merely used as an example for description. This is not limited.

$\lambda$ is an index of a code division multiplexing (code division multiplexing, CDM) group to which the DMRS port $p$ belongs, and DMRS ports in a same CDM group occupy a same time-frequency resource.

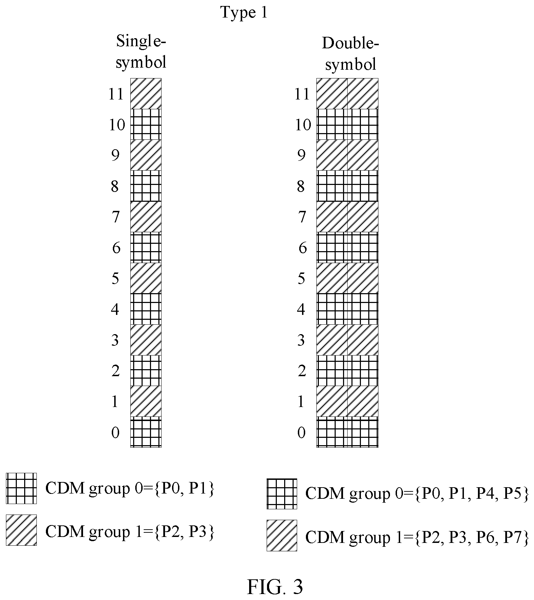

For the DMRS configuration type 1, a DMRS time-frequency resource mapping manner may be shown in FIG. 3.

For a single-symbol DMRS (corresponding to $l'=0$), a maximum of four ports is supported, and a DMRS resource occupies one OFDM symbol. The four DMRS ports are divided into two code division multiplexing groups. A CDM group 0 includes DMRS ports P0 and P1, and a CDM group 1 includes DMRS ports P2 and P3. P0 may be the port whose index is 1000 in Table 1, P1 may be the port whose index is 1001 in Table 1, P2 may be the port whose index is 1002 in Table 1, and P3 may be the port whose index is 1003 in Table 1. The CDM group 0 and the CDM group 1 are subjected to frequency division multiplexing (mapped to different frequency domain resources). DMRS ports included in a CDM group are mapped to a same time-frequency resource. Reference signal sequences corresponding to the DMRS ports included in the CDM group are distinguished by using a cover code sequence, thereby ensuring orthogonality of the DMRS ports in the CDM group.

Specifically, a DMRS corresponding to P0 and a DMRS corresponding to P1 are in a same RE, and resource mapping is performed in a comb manner in frequency domain. To be specific, adjacent frequency domain resources occupied by the DMRS corresponding to P0 and the DMRS corresponding to P1 are separated by one subcarrier. For one DMRS port, two adjacent occupied REs correspond to one cover code sequence whose length is 2. For example, for a subcarrier 0 and a subcarrier 2, a group of cover code sequences (+1+1 and +1-1) whose lengths are 2 is used for P0 and P1. Similarly, a DMRS corresponding to P2 and a DMRS corresponding to P3 are in a same RE, and are mapped, in a comb manner in frequency domain, to REs that are not occupied by P0 and P1. For a subcarrier 1 and a subcarrier 3, a group of cover code sequences (+1+1 and +1-1) whose lengths are 2 is used for P2 and P3.

For a double-symbol DMRS (corresponding to $l'=0$ or 1), a maximum of eight ports is supported, and a DMRS resource occupies two OFDM symbols. The eight DMRS ports are divided into two CDM groups. A CDM group 0 includes DMRS ports P0, P1, P4, and P5, and a CDM group 1 includes DMRS ports P2, P3, P6, and P7. P4 may be the port whose index is 1004 in Table 1, P5 may be the port whose index is 1005 in Table 1, P6 may be the port whose index is 1006 in Table 1, and P7 may be the port whose index is 1007 in Table 1. The CDM group 0 and the CDM group 1 are subjected to frequency division multiplexing. DMRS ports included in a CDM group are mapped to a same time-frequency resource. Reference signal sequences corresponding to the DMRS ports included in the CDM group are distinguished by using a cover code sequence.

Specifically, DMRSs corresponding to P0, P1, P4, and P5 are in a same RE, and resource mapping is performed in a comb manner in frequency domain. To be specific, adjacent frequency domain resources occupied by the DMRS corresponding to P0, the DMRS corresponding to P1, the DMRS corresponding to P4, and the DMRS corresponding to P5 are separated by one subcarrier. For one DMRS port, two adjacent occupied subcarriers and two adjacent occupied OFDM symbols correspond to one cover code sequence whose length is 4.

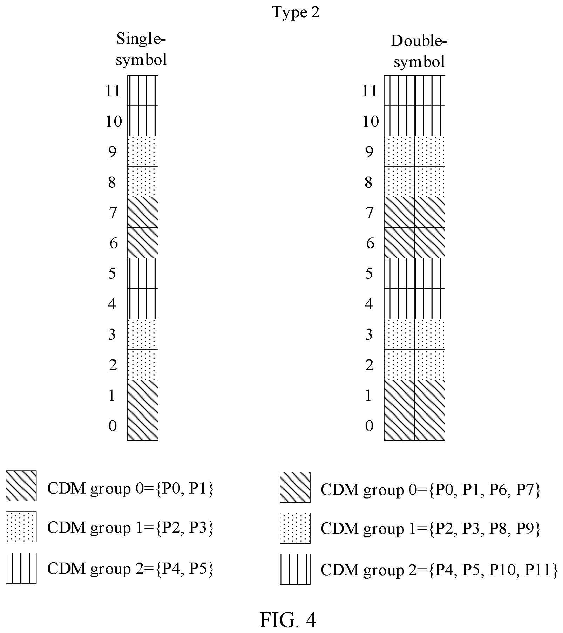

For the DMRS configuration type 2, a time-frequency resource mapping manner is shown in FIG. 4.

For a single-symbol DMRS, a maximum of six ports is supported, and a DMRS resource occupies one OFDM symbol. The six DMRS ports are divided into three CDM groups. A CDM group 0 includes DMRS ports P0 and P1, a CDM group 1 includes DMRS ports P2 and P3, and a CDM group 2 includes DMRS ports P4 and P5. P0 may be the port whose index is 1000 in Table 2, P1 may be the port whose index is 1001 in Table 2, P2 may be the port whose index is 1002 in Table 2, P3 may be the port whose index is 1003 in Table 2, P4 may be the port whose index is 1004 in Table 2, and P5 may be the port whose index is 1005 in Table 2. Frequency division multiplexing is performed between CDM groups, and DMRSs corresponding to DMRS ports included in a CDM group are mapped to a same time-frequency resource. Reference signal sequences corresponding to the DMRS ports included in the CDM group are distinguished by using a cover code sequence. For one DMRS port, a DMRS reference signal corresponding to the DMRS port is mapped, in frequency domain, to a plurality of resource subblocks including two consecutive subcarriers, and adjacent resource subblocks are separated by four subcarriers in frequency domain.

Specifically, a DMRS corresponding to P0 and a DMRS corresponding to P1 are in a same RE, and resource mapping is performed in a comb manner in frequency domain. For example, a frequency domain resource granularity is one RB. P0 and P1 occupy a subcarrier 0, a subcarrier 1, a subcarrier 6, and a subcarrier 7. P2 and P3 occupy a subcarrier 2, a subcarrier 3, a subcarrier 8, and a subcarrier 9. A DMRS corresponding to P4 and a DMRS corresponding to P5 occupy a subcarrier 4, a subcarrier 5, a subcarrier 10, and a subcarrier 11. Two DMRS ports included in one CDM group correspond, in two adjacent subcarriers, to cover code sequences (+1+1 and +1-1) whose lengths are 2.

For a double-symbol DMRS, a maximum of 12 ports is supported, and a DMRS resource occupies two OFDM symbols. The 12 DMRS ports are divided into three CDM groups. A CDM group 0 includes DMRS ports P0, P1, P6, and P7, a CDM group 1 includes DMRS ports P2, P3, P8, and P9, and a CDM group 2 includes DMRS ports P4, P5, P10, and P11. P8 may be the port whose index is 1008 in Table 2, P9 may be the port whose index is 1009 in Table 2, P10 may be the port whose index is 1010 in Table 2, and P11 may be the port whose index is 1011 in Table 2. Frequency division multiplexing is performed between CDM groups, and DMRSs corresponding to DMRS ports included in a CDM group are mapped to a same time-frequency resource. Reference signal sequences corresponding to the DMRS ports included in the CDM group are distinguished by using a cover code sequence. For one DMRS port, a DMRS reference signal corresponding to the DMRS port is mapped, in frequency domain, to a plurality of resource subblocks including two consecutive subcarriers, and adjacent resource subblocks are separated by four subcarriers in frequency domain.

Specifically, a DMRS corresponding to P0, a DMRS corresponding to P1, a DMRS corresponding to P6, and a DMRS corresponding to P7 are in a same RE, and resource mapping is performed in a comb manner in frequency domain. For example, a frequency domain resource granularity is one RB. The DMRS corresponding to P0, the DMRS corresponding to P1, the DMRS corresponding to P6, and the DMRS corresponding to P7 occupy a subcarrier 0, a subcarrier 1, a subcarrier 6, and a subcarrier 7 corresponding to an OFDM symbol 0 and an OFDM symbol 1. A DMRS corresponding to P2, a DMRS corresponding to P3, a DMRS corresponding to P8, and a DMRS corresponding to P9 occupy a subcarrier 2, a subcarrier 3, a subcarrier 8, and a subcarrier 9 corresponding to the OFDM symbol 1 and an OFDM symbol 2. A DMRS corresponding to P4, a DMRS corresponding to P5, a DMRS corresponding to P10, and a DMRS corresponding to P11 occupy a subcarrier 4, a subcarrier 5, a subcarrier 10, and a subcarrier 11 corresponding to the OFDM symbol 1 and the OFDM symbol 2. Four DMRS ports included in one CDM group correspond, in two adjacent subcarriers corresponding to two OFDM symbols, to cover code sequences (+1+1+1+1/+1+1-1-1/+1-1+1-1/+1-1-1+1) whose lengths are 4.

It can be learned from the foregoing description that, in the NR system, a maximum quantity of DMRS ports supported by a DMRS is 12. As wireless communication devices are deployed more densely in the future, a quantity of terminal devices further increases, and a requirement for an uplink capacity is increasingly high. An existing DMRS transmission solution cannot satisfy a requirement. Further, DMRSs are consecutive in frequency domain. As a result, in a scenario in which a terminal device moves at a high speed, DMRSs in adjacent subcarriers have severe inter-subcarrier interference, and consequently channel estimation precision is poor, affecting data demodulation performance.

For ease of understanding embodiments of this application, the following points are first described.

(1) "Sending" and "receiving" in embodiments of this application represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may alternatively be understood as "outputting" of a chip interface, and "receiving" may alternatively be understood as "inputting" of the chip interface.

In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

It may be understood that necessary processing, for example, encoding and modulation, may be performed on information between a source end and a destination end of information sending, but the destination end may understand valid information from the source end. Similar expressions in this application may be understood similarly. Details are not described again.

(2) In embodiments of this application, "indication" may include a direct indication and an indirect indication, or may include an explicit indication and an implicit indication. Information indicated by a piece of information (for example, the following indication information) is referred to as to-be-indicated information. In a specific implementation process, the to-be-indicated information is indicated in a plurality of manners. By way of example and not limitation, the to-be-indicated information may be directly indicated, for example, the to-be-indicated information or an index of the to-be-indicated information is indicated. Alternatively, the to-be-indicated information may be indirectly indicated by indicating other information. There is an association relationship between the other information and the to-be-indicated information. Alternatively, only a part of the to-be-indicated information may be indicated, and the remaining part of the to-be-indicated information is known or pre-agreed on. For example, specific information may be indicated by using an arrangement sequence of pieces of information that are pre-agreed on (for example, predefined in a protocol), to reduce indication overheads to some extent. A specific indication manner is not limited in this application. It may be understood that, for a sender of the indication information, the indication information may indicate to-be-indicated information, and for a receiver of the indication information, the indication information may be for determining the to-be-indicated information.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

When the method provided in this application is applied to the system in FIG. 1, the terminal device or a module in the terminal device in FIG. 1 may implement the method performed by the terminal device in embodiments of this application, and the network device or a module in the network device in FIG. 1 may implement the method performed by the network device in embodiments of this application.

It may be understood that this application does not particularly limit a specific structure of an execution body of the method provided in embodiments of this application. The structure may be used in a terminal device or a module in the terminal device, or may be used in a network device or a module in the network device, provided that a program that records code of the method provided in embodiments of this application can be run to perform communication according to the method provided in embodiments of this application. Interaction between a first device and a second device is used as an example below for description, and other cases are not described again. The first device may be a terminal device or a network device, and the second device may be a terminal device or a network device. This is not limited in this application.

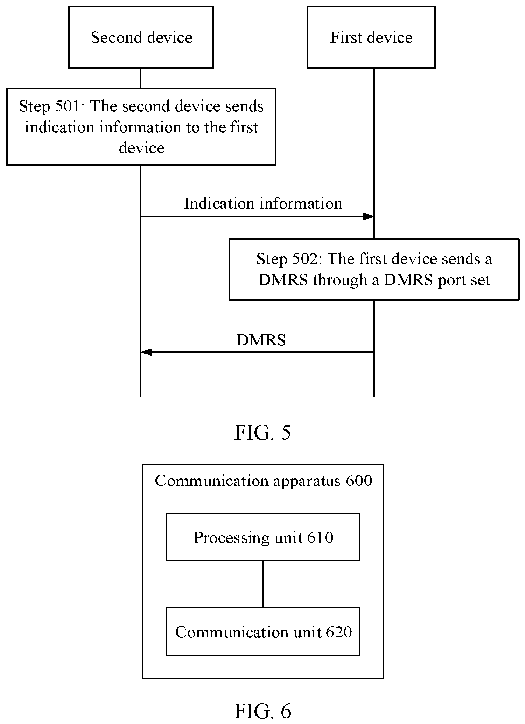

FIG. 5 is a schematic flowchart of a signal transmission method according to an embodiment of this application. The method includes the following steps.

Step 501: A second device sends indication information to a first device.

Correspondingly, the first device receives the indication information.

The indication information indicates a DMRS port set and a code division manner for each DMRS port in the DMRS port set. The DMRS port set includes one or more DMRS ports. DMRS ports in the DMRS port set that belong to a same CDM group have a same code division manner, and DMRS ports in the DMRS port set that belong to different CDM groups may have a same code division manner or different code division manners. This is not limited in this application.

In this application, the second device may send the indication information by using downlink control information (downlink control information, DCI) or higher layer signaling. In an implementation, the DCI or the higher layer signaling includes two bits, and different values of the two bits correspond to different code division manners. For example, 00 represents a code division manner 1, 01 represents a code division manner 2, 10 represents a code division manner 3, and 11 represents a code division manner 4.

In this application, the indication information may include an index of each DMRS port in the DMRS port set, to indicate the DMRS port set.

In this application, a DMRS port may have the following four code division manners.

In the code division manner 1, code division is performed on different symbols on a same subcarrier, that is, code division is not performed in time domain, and code division can be performed only in frequency domain. It may be understood that a DMRS transmitted through the DMRS port and a DMRS transmitted through another DMRS port are subjected to code division multiplexing in frequency domain, but are not subjected to code division multiplexing in time domain.

In the code division manner 2, code division is performed on a plurality of subcarriers on a plurality of symbols, that is, code division is performed in frequency domain and in time domain. It may be understood that a DMRS transmitted through the DMRS port and a DMRS transmitted through another DMRS port are subjected to code division multiplexing in frequency domain, and are subjected to code division multiplexing in time domain.

In the code division manner 3, code division is performed on different subcarriers on a same symbol, that is, code division is not performed in frequency domain, and code division can be performed only in time domain. It may be understood that a DMRS transmitted through the DMRS port and a DMRS transmitted through another DMRS port are not subjected to code division multiplexing in frequency domain, but are subjected to code division multiplexing in time domain.

In the code division manner 4, code division is not performed on a subcarrier, and code division is not performed on a symbol. It may be understood that a DMRS transmitted through the DMRS port and a DMRS transmitted through another DMRS port are not subjected to code division multiplexing in frequency domain, and are not subjected to code division multiplexing in time domain. In this manner, DMRSs transmitted through different ports may be distinguished through frequency division and time division.

A code division manner for a DMRS port may also be described as a code division manner for a DMRS, or a code division manner for a DMRS transmitted through the DMRS port. The "symbol" in the code division manner 1 to the code division manner 4 may be an OFDM symbol. In the following descriptions of this application, the OFDM symbol is referred to as a symbol for short. The another DMRS port is another DMRS port that is in a same CDM group as the DMRS port.

How the second device determines the code division manner for each DMRS port in the DMRS port set is not limited in this application. For example, if the first device is in a high-speed moving state, to avoid inter-subcarrier interference caused by aliasing (that is, non-orthogonality) of DMRSs on different DMRS ports, it may be configured that the DMRSs are not subjected to code division in time domain, and the code division manner 1 or the code division manner 4 may be indicated for use.

In this application, the code division manner for the DMRS port may indicate a correspondence between the DMRS port and at least one of the following parameters: a CDM group index, a subcarrier offest, a frequency domain OCC code, and a time domain OCC code. A parameter corresponding to a DMRS port has different values in different code division manners.

For example, in the code division manner 1, code division is performed on different symbols on a same subcarrier. When a DMRS transmitted through a DMRS port is subjected to code division multiplexing in frequency domain but is not subjected to code division multiplexing in time domain, parameters corresponding to the DMRS port may be shown in Table 3.

Table 3

| $p$ | CDM group ($r$) | $\Delta$ | $w_f(k')$ | | | $w_t(l')$ | | | |
|---|---|---|---|---|---|---|---|---|---|
| | | | k'=0\| k'=1\|···\| k'=S-1 | | | l'=0 | l'=1 | ··· | l'=L-1 |
| 1000 | 0 | Predefined or configured by a network device | The frequency domain OCC code is determined based on a value of S | | | +1 | 0 | ··· | 0 |
| … | … | | | | | +1 | 0 | ··· | 0 |
| 1000+S-1 | 0 | | | | | +1 | 0 | ··· | 0 |
| 1000+S | 1 | | … | | | +1 | 0 | ··· | 0 |
| … | … | | … | | | +1 | 0 | ··· | 0 |
| 1000+2S-1 | 1 | | … | | | +1 | 0 | ··· | 0 |
| … | … | | … | | | +1 | 0 | ··· | 0 |
| 1000+(X/L-1)S | X/L-1 | | … | | | +1 | 0 | ··· | 0 |
| … | … | | … | | | +1 | 0 | ··· | 0 |
| 1000+(X/L-1)S-1 | X/L-1 | | … | | | +1 | 0 | ··· | 0 |
| 1000+(X/L)S | 0 | Predefined or configured by a network device | The frequency domain OCC code is determined based on a value of S | | | 0 | +1 | ··· | 0 |
| … | … | | … | | | 0 | +1 | ··· | 0 |
| 1000+(X/L)S+S-1 | 0 | | … | | | 0 | +1 | ··· | 0 |
| 1000+(X/L)S+S | 1 | | … | | | 0 | +1 | ··· | 0 |
| … | … | | … | | | 0 | +1 | ··· | 0 |
| 1000+(X/L)S+2S-1 | 1 | | … | | | 0 | +1 | ··· | 0 |
| … | … | | … | | | 0 | +1 | ··· | 0 |

(continued)

| p | CDM group (r) | Δ | $w_f(k')$ | | | $w_t(l')$ | | | |
|---|---|---|---|---|---|---|---|---|---|
| | | | k'=0\| k'=1\|⋯\| k'=S-1 | | | l'=0 | l'=1 | ⋯ | l'=L-1 |
| 1000+(2X/L)S-S | X/L-1 | | ⋯ | | | 0 | +1 | ⋯ | 0 |
| ⋯ | ⋯ | | ⋯ | | | 0 | +1 | ⋯ | 0 |
| 1000+(2X/L)S-1 | X/L-1 | | ⋯ | | | 0 | +1 | ⋯ | 0 |
| ⋯ | ⋯ | ⋯ | ⋯ | | | ⋯ | ⋯ | ⋯ | ⋯ |
| 1000+X/L*(L-1)S | 0 | Predefined or configured by a network device | The frequency domain OCC code is determined based on a value of S | | | 0 | 0 | ⋯ | +1 |
| ⋯ | ⋯ | | | | | 0 | 0 | ⋯ | +1 |
| 1000+X/L*(L-1)S+S-1 | 0 | | | | | 0 | 0 | ⋯ | +1 |
| 1000+X/L*(L-1)S+S | 1 | | ⋯ | | | 0 | 0 | ⋯ | +1 |
| ⋯ | ⋯ | | ⋯ | | | 0 | 0 | ⋯ | +1 |
| 1000+X/L*(L-1)S+2S-1 | 1 | | ⋯ | | | 0 | 0 | ⋯ | +1 |
| ⋯ | ⋯ | | ⋯ | | | 0 | 0 | ⋯ | +1 |
| 1000+X-S | X/L-1 | | ⋯ | | | 0 | 0 | ⋯ | +1 |
| ⋯ | ⋯ | | ⋯ | | | 0 | 0 | ⋯ | +1 |
| 1000+X-1 | X/L-1 | | ⋯ | | | 0 | 0 | ⋯ | +1 |

In Table 3, p represents an index of a DMRS port, is numbered from 1000, and is incremental in order, and a maximum index is 1000+X-1. For ease of description, in Table 3, not all values of p are listed one by one in the column corresponding to p. For example, an ellipsis between 1000 and 1000+S-1 indicates that S-2 values of p are omitted, that is, 1001 to 1000+S-2 are omitted. The values omitted herein do not mean that the values do not exist, but are not listed one by one due to space limitation. A person skilled in the art can determine the omitted values with reference to the context of the table. X is a maximum port quantity of DMRS ports available for DMRS transmission, and X is predefined or configured by the network device. For example, X is an integer greater than or equal to 12. DMRS ports in the DMRS port set are some or all DMRS ports in the X DMRS ports.

r represents an index of a CDM group, and an example in which one CDM group includes S DMRS ports is used for description in Table 3. A value of S is a power of 2. For example, S=2, 4, or 8. In this application, a quantity of DMRS ports included in one CDM group is equal to a length of a frequency domain OCC code. Therefore, S may also be understood as the length of the frequency domain OCC code. For ease of description, in Table 3, not all values of r are listed one by one in the column corresponding to r. For example, an ellipsis between 0 and 0 indicates that S-2 0s are omitted, and an ellipsis between 1 and 1 indicates that S-2 1s are omitted. Other cases are not described again. A person skilled in the art can determine the omitted values with reference to the context of the table.

L is a total quantity of DMRS symbols, that is, a quantity of symbols occupied by a DMRS. L is predefined or configured by the network device. For example, it is predefined or configured by the network device that L=1, 2, 4, or the like. In the scenario shown in Table 3, a value of X/L is an integer.

Δ is a subcarrier offest, and represents an offset of subcarrier occupied by DMRSs corresponding to two CDM groups, that is, a quantity of idle subcarriers. Values of Δ corresponding to all of DMRS ports in one CDM group are the same. Δ is predefined or configured by the network device. For example, it is predefined or configured by the network device that Δ=0, 1, 2, 4, or the like. For another example, a value of Δ may be alternatively determined based on a normalized Doppler frequency shift fed back by the second device. For example, when the normalized Doppler frequency shift is less than 3%, Δ=1; when the normalized Doppler frequency shift is within [3%, 5%], Δ=2; when the normalized Doppler frequency shift is within [5%, 10%], Δ=3; when the normalized Doppler frequency shift is within [10%, 15%], Δ=4; or when the normalized Doppler frequency shift is within [15%, 20%], Δ=5 or 6. The normalized Doppler frequency shift is defined as a Doppler frequency shift divided by a subcarrier spacing of a system. Doppler frequency shift fd=v/c*fc, where v represents a moving speed of the second device, c represents the speed of light, and fc represents a carrier frequency used by the second device in an accessed communication system.

k' represents a subcarrier index of a DMRS port in a same CDM group, and a value range of k' is from 0 to S-1. For ease of description, in Table 3, not all values of k' are listed one by one in the column corresponding to $w_f(k')$. For example, an ellipsis between k'=1 and k'=S-1 indicates that S-3 values are omitted, that is, k'=2 to k'=S-2 are omitted. In addition, in the column corresponding to $w_f(k')$, values of frequency domain OCC codes corresponding to different values of k' are described in Table 4, Table 5, Table 6, and Table 7 below by using examples. A person skilled in the art can determine the omitted values with reference to the context of the table.

l' represents a DMRS symbol index, and a value range of l' is from 0 to L-1. For ease of description, in Table 3, not all values of l' are listed one by one in the column corresponding to $w_t(l')$. For example, an ellipsis between l'=1 and l'-L-1 indicates that L-3 values are omitted, that is, l'=2 to l'=L-2 are omitted. In addition, in the column corresponding to $w_t(l')$, values of time domain OCC codes corresponding to different values of l' may have the following rule: In each of (X/L-1)S rows corresponding to p=1000 to p=1000+(X/L-1)S-1, a time domain OCC code corresponding to l'=0 is +1, and time domain OCC codes corresponding to l'=1 to l'=L-1 are all 0. In each of (X/L-1)S rows corresponding to p=1000+(X/L)S to p=1000+(X/L)S+S-1, a time domain OCC code corresponding to l'=1 is +1, and time domain OCC codes corresponding to l'=0 and l'=2 to l'=L-1 are all 0. In this manner, finally, in each of (X/L-1)S rows corresponding to p=1000+X/L*(L-1)S to p=1000+X-1, a time domain OCC code corresponding to l'-L-1 is +1, and time domain OCC codes corresponding to l'=0 to l'=L-2 are all 0. A person skilled in the art can determine the omitted values with reference to the context of the table.

In Table 3, a specific implementation of the frequency domain OCC code is not limited. For example, when S=2, for the frequency domain OCC code, refer to Table 4.

Table 4

| p | CDM group (r) | $w_f(k')$ | |
| | | k'=0 | k'=1 |
|---|---|---|---|
| 1000 | 0 | +1 | +1 |
| 1001 | 0 | +1 | -1 |
| 1002 | 1 | +1 | +1 |
| 1003 | 1 | +1 | -1 |

Table 4 is described by using only two CMD groups as an example. A case of another CMD group is similar, and details are not described again.

For another example, when S=4, for the frequency domain OCC code, refer to Table 5.

Table 5

| p | CDM group (r) | $w_f(k')$ | | | |
| | | k'=0 | k'=1 | k'=2 | k'=3 |
|---|---|---|---|---|---|
| 1000 | 0 | +1 | +1 | +1 | +1 |
| 1001 | 0 | +1 | +1 | -1 | -1 |
| 1002 | 0 | +1 | -1 | +1 | -1 |
| 1003 | 0 | +1 | -1 | -1 | +1 |

Table 5 is described by using only one CMD group as an example. A case of another CMD group is similar, and details are not described again.

A case in which the length of the frequency domain OCC code is another value is not described again, provided that it is ensured that frequency domain OCC codes used for S DMRS ports in one CDM group are orthogonal to each other.

With reference to the foregoing descriptions, assuming that X=16, S=4, and L=1 are used as an example, a specific implementation form of Table 3 may be shown in the following Table 6.

Table 6

| p | CDM group (r) | Δ | $w_f(k')$ | | | | $w_t(l')$ |
|---|---|---|---|---|---|---|---|
| | | | k'=0 | k'=1 | k'=2 | k'=3 | l'=0 |
| 1000 | 0 | 0 | +1 | +1 | +1 | +1 | +1 |
| 1001 | 0 | 0 | +1 | +1 | -1 | -1 | +1 |
| 1002 | 0 | 0 | +1 | -1 | +1 | -1 | +1 |
| 1003 | 0 | 0 | +1 | -1 | -1 | +1 | +1 |
| 1004 | 1 | 4 | +1 | +1 | +1 | +1 | +1 |
| 1005 | 1 | 4 | +1 | +1 | -1 | -1 | +1 |
| 1006 | 1 | 4 | +1 | -1 | +1 | -1 | +1 |
| 1007 | 1 | 4 | +1 | -1 | -1 | +1 | +1 |
| 1008 | 2 | 8 | +1 | +1 | +1 | +1 | +1 |
| 1009 | 2 | 8 | +1 | +1 | -1 | -1 | +1 |
| 1010 | 2 | 8 | +1 | -1 | +1 | -1 | +1 |
| 1011 | 2 | 8 | +1 | -1 | -1 | +1 | +1 |
| 1012 | 3 | 12 | +1 | +1 | +1 | +1 | +1 |
| 1013 | 3 | 12 | +1 | +1 | -1 | -1 | +1 |
| 1014 | 3 | 12 | +1 | -1 | +1 | -1 | +1 |
| 1015 | 3 | 12 | +1 | -1 | -1 | +1 | +1 |

In Table 6, l'=0 indicates that only one OFDM symbol is allocated for transmitting a DMRS, that is, L=1.

With reference to the foregoing descriptions, assuming that X=16, S=4, and L=2 are used as an example, a specific implementation form of Table 3 may be shown in the following Table 7.

Table 7

| p | CDM group (r) | Δ | $w_f(k')$ | | | | $w_t(l')$ | |
|---|---|---|---|---|---|---|---|---|
| | | | k'=0 | k'=1 | k'=2 | k'=3 | l'=0 | l'=1 |
| 1000 | 0 | 0 | +1 | +1 | +1 | +1 | +1 | 0 |
| 1001 | 0 | 0 | +1 | +1 | -1 | -1 | +1 | 0 |
| 1002 | 0 | 0 | +1 | -1 | +1 | -1 | +1 | 0 |
| 1003 | 0 | 0 | +1 | -1 | -1 | +1 | +1 | 0 |
| 1004 | 1 | 4 | +1 | +1 | +1 | +1 | +1 | 0 |
| 1005 | 1 | 4 | +1 | +1 | -1 | -1 | +1 | 0 |
| 1006 | 1 | 4 | +1 | -1 | +1 | -1 | +1 | 0 |
| 1007 | 1 | 4 | +1 | -1 | -1 | +1 | +1 | 0 |
| 1008 | 2 | 0 | +1 | +1 | +1 | +1 | 0 | +1 |
| 1009 | 2 | 0 | +1 | +1 | -1 | -1 | 0 | +1 |
| 1010 | 2 | 0 | +1 | -1 | +1 | -1 | 0 | +1 |
| 1011 | 2 | 0 | +1 | -1 | -1 | +1 | 0 | +1 |
| 1012 | 3 | 4 | +1 | +1 | +1 | +1 | 0 | +1 |
| 1013 | 3 | 4 | +1 | +1 | -1 | -1 | 0 | +1 |
| 1014 | 3 | 4 | +1 | -1 | +1 | -1 | 0 | +1 |

(continued)

| p | CDM group (r) | Δ | $w_f(k')$ | | | | $w_t(l')$ | |
|---|---|---|---|---|---|---|---|---|
| | | | k'=0 | k'=1 | k'=2 | k'=3 | l'=0 | l'=1 |
| 1015 | 3 | 4 | +1 | -1 | -1 | +1 | 0 | +1 |

In Table 7, l'=0 or l'=1 indicates that two OFDM symbols are allocated for transmitting a DMRS, that is, L=2.

In the code division manner 2, code division is performed on a plurality of subcarriers on a plurality of symbols, and the DMRS transmitted through the DMRS port is subjected to code division multiplexing in frequency domain, and is subjected to code division multiplexing in time domain. Parameters corresponding to the DMRS port may be shown in Table 8.

Table 8

| p | CDM group (r) | Δ | $w_f(k')$ | $w_t(l')$ |
|---|---|---|---|---|
| | | | k'=0\| k'=1\|···\| k'=S-1 | l'=0\| l'=1\|···\| l'=L-1 |
| 1000 | 0 | Predefined or configured by a network device | The frequency domain OCC code is determined based on a value of S | The time domain OCC code is determined based on a value of S |
| … | … | | | |
| 1000+S-1 | 0 | | | |
| 1000+S | 1 | | The frequency domain OCC code is determined based on a value of S | The time domain OCC code is determined based on a value of S |
| … | … | | | |
| 1000+2S-1 | 1 | | | |
| … | … | | … | … |
| 1000+(X/S-1)S | X/S-1 | | The frequency domain OCC code is determined based on a value of S | The time domain OCC code is determined based on a value of S |
| … | … | | | |
| 1000+X-1 | X/S-1 | | | |

For meanings of the parameters in Table 8, refer to the foregoing descriptions. Details are not described herein again. In the scenario shown in Table 8, a value of X/S is an integer.

In Table 8, not all values of p are listed one by one in the column corresponding to p. For example, an ellipsis between 1000 and 1000+S-1 indicates that S-2 values of p are omitted, that is, 1001 to 1000+S-2 are omitted. Not all values of r are listed one by one in the column corresponding to r. For example, an ellipsis between 0 and 0 indicates that S-2 0s are omitted, and an ellipsis between 1 and 1 indicates that S-2 1s are omitted. Other cases are not described again. In addition, for an ellipsis in the column corresponding to $w_f(k')$ and an ellipsis in the column corresponding to $w_t(l')$, refer to the descriptions in Table 3. Details are not described herein again. A person skilled in the art can determine the omitted values with reference to the context of the table.

For example, assuming that X=16, S=2, and L=2 are used as an example, a specific implementation form of Table 8 may be shown in the following Table 9.

Table 9

| p | CDM group (r) | Δ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |
| 1001 | 0 | 0 | +1 | +1 | -1 | -1 |
| 1002 | 0 | 0 | +1 | -1 | +1 | -1 |
| 1003 | 0 | 0 | +1 | -1 | -1 | +1 |
| 1004 | 1 | 2 | +1 | +1 | +1 | +1 |
| 1005 | 1 | 2 | +1 | +1 | -1 | -1 |

(continued)

| p | CDM group (r) | Δ | $w_f(k')$ | | $w_t(l')$ | |
|---|---|---|---|---|---|---|
| | | | k'=0 | k'=1 | l'=0 | l'=1 |
| 1006 | 1 | 2 | +1 | -1 | +1 | -1 |
| 1007 | 1 | 2 | +1 | -1 | -1 | +1 |
| 1008 | 2 | 4 | +1 | +1 | +1 | +1 |
| 1009 | 2 | 4 | +1 | +1 | -1 | -1 |
| 1010 | 2 | 4 | +1 | -1 | +1 | -1 |
| 1011 | 2 | 4 | +1 | -1 | -1 | +1 |
| 1012 | 3 | 6 | +1 | +1 | +1 | +1 |
| 1013 | 3 | 6 | +1 | +1 | -1 | -1 |
| 1014 | 3 | 6 | +1 | -1 | +1 | -1 |
| 1015 | 3 | 6 | +1 | -1 | -1 | +1 |

In Table 9, l'=0 or l'=1 indicates that two OFDM symbols are allocated for transmitting a DMRS, that is, L=2.

In the code division manner 3, code division is performed on different subcarriers on a same symbol. When the DMRS transmitted through the DMRS port is not subjected to code division multiplexing in frequency domain, but is subjected to code division multiplexing in time domain, parameters corresponding to the DMRS port may be shown in Table 10.

Table 10

| p | CDM group (r) | Δ | $w_f(k')$ | | | | $w_t(l')$ |
|---|---|---|---|---|---|---|---|
| | | | k'=0 | k'=1 | ··· | k'=S-1 | l=0\| l'=1\|···\| l'-L-1 |
| 1000 | 0 | Predefined or configured by a network device | +1 | 0 | ··· | 0 | The time domain OCC code is determined based on a value of S |
| ··· | ··· | | +1 | 0 | ··· | 0 | |
| 1000+S-1 | 0 | | +1 | 0 | ··· | 0 | |
| 1000+S | 1 | | +1 | 0 | ··· | 0 | The time domain OCC code is determined based on a value of S |
| ··· | ··· | | +1 | 0 | ··· | 0 | |
| 1000+2S-1 | 1 | | +1 | 0 | ··· | 0 | |
| ··· | ··· | | +1 | 0 | ··· | 0 | |
| 1000+L-S | L/S | | +1 | 0 | ··· | 0 | The time domain OCC code is determined based on a value of S |
| ··· | ··· | | +1 | 0 | ··· | 0 | |
| 1000+L-1 | L/S | | +1 | 0 | ··· | 0 | |
| 1000+L | 0 | Predefined or configured by a network device | 0 | +1 | ··· | 0 | The time domain OCC code is determined based on a value of S |
| ··· | ··· | | 0 | +1 | ··· | 0 | |
| 1000+L+S-1 | 0 | | 0 | +1 | ··· | 0 | |
| 1000+L+S | 1 | | 0 | +1 | ··· | 0 | The time domain OCC code is determined based on a value of S |
| ··· | ··· | | 0 | +1 | ··· | 0 | |
| 1000+L+2S-1 | 1 | | 0 | +1 | ··· | 0 | |
| ··· | ··· | | 0 | +1 | ··· | 0 | |
| 1000+2L-S | L/S | | 0 | +1 | ··· | 0 | The time domain OCC code is determined based on a value of S |
| ··· | ··· | | 0 | +1 | ··· | 0 | |
| 1000+2L-1 | L/S | | 0 | +1 | ··· | 0 | |

(continued)

| p | CDM group (r) | Δ | $w_f(k')$ | | | | $w_t(l')$ |
|---|---|---|---|---|---|---|---|
| | | | k'=0\| k'=1\|···\| k'=S-1 | | | | l=0\| l'=1\|···\| l'-L-1 |
| … | … | … | … | … | … | … | |
| 1000+(X/L-1)L | 0 | Predefined or configured by a network device | 0 | 0 | ··· | +1 | The time domain OCC code is determined based on a value of S |
| … | … | | 0 | 0 | ··· | +1 | |
| 1000+(X/L-1)L+S-1 | 0 | | 0 | 0 | ··· | +1 | |
| 1000+(X/L-1)L+S | 1 | | 0 | 0 | ··· | +1 | The time domain OCC code is determined based on a value of S |
| … | … | | 0 | 0 | ··· | +1 | |
| 1000+(X/L-1)L+2S-1 | 1 | | 0 | 0 | ··· | +1 | |
| … | … | | 0 | 0 | ··· | +1 | |
| 1000+X-S | L/S | | 0 | 0 | ··· | +1 | The time domain OCC code is determined |
| … | … | | 0 | 0 | ··· | +1 | |
| 1000+X-1 | L/S | | 0 | 0 | ··· | +1 | based on a value of S |

For meanings of the parameters in Table 10, refer to the foregoing descriptions. Details are not described herein again. In the scenario shown in Table 10, a value of L/S is an integer.

In Table 10, not all values of p are listed one by one in the column corresponding to p. For example, an ellipsis between 1000 and 1000+S-1 indicates that S-2 values of p are omitted, that is, 1001 to 1000+S-2 are omitted. Not all values of r are listed one by one in the column corresponding to r. For example, an ellipsis between 0 and 0 indicates that S-2 0s are omitted, and an ellipsis between 1 and 1 indicates that S-2 1s are omitted. Other cases are not described again. In addition, for an ellipsis in the column corresponding to $w_f(k')$ and an ellipsis in the column corresponding to $w_t(l')$, refer to the descriptions in Table 3. Details are not described herein again. A person skilled in the art can determine the omitted values with reference to the context of the table.

With reference to the foregoing descriptions, assuming that X=16, S=4, and L=4 are used as an example, a specific implementation form of Table 10 may be shown in the following Table 11.

Table 11

| p | CDM group (r) | Δ | $w_f(k')$ | | | | $w_t(l')$ | | | |
|---|---|---|---|---|---|---|---|---|---|---|
| | | | k'=0 | k'=1 | k'=2 | k'=3 | l'=0 | l'=1 | l'=2 | l'=3 |
| 1000 | 0 | 0 | +1 | 0 | 0 | 0 | +1 | +1 | +1 | +1 |
| 1001 | 0 | 0 | +1 | 0 | 0 | 0 | +1 | +1 | -1 | -1 |
| 1002 | 0 | 0 | +1 | 0 | 0 | 0 | +1 | -1 | +1 | -1 |
| 1003 | 0 | 0 | +1 | 0 | 0 | 0 | +1 | -1 | -1 | +1 |
| 1004 | 1 | 1 | 0 | +1 | 0 | 0 | +1 | +1 | +1 | +1 |
| 1005 | 1 | 1 | 0 | +1 | 0 | 0 | +1 | +1 | -1 | -1 |
| 1006 | 1 | 1 | 0 | +1 | 0 | 0 | +1 | -1 | +1 | -1 |
| 1007 | 1 | 1 | 0 | +1 | 0 | 0 | +1 | -1 | -1 | +1 |
| 1008 | 2 | 2 | 0 | 0 | +1 | 0 | +1 | +1 | +1 | +1 |
| 1009 | 2 | 2 | 0 | 0 | +1 | 0 | +1 | +1 | -1 | -1 |
| 1010 | 2 | 2 | 0 | 0 | +1 | 0 | +1 | -1 | +1 | -1 |
| 1011 | 2 | 2 | 0 | 0 | +1 | 0 | +1 | -1 | -1 | +1 |
| 1012 | 3 | 3 | 0 | 0 | 0 | +1 | +1 | +1 | +1 | +1 |
| 1013 | 3 | 3 | 0 | 0 | 0 | +1 | +1 | +1 | -1 | -1 |

(continued)

| p | CDM group (r) | Δ | $w_f(k')$ | | | | $w_t(l')$ | | | |
|---|---|---|---|---|---|---|---|---|---|---|
| | | | k'=0 | k'=1 | k'=2 | k'=3 | l'=0 | l'=1 | l'=2 | l'=3 |
| 1014 | 3 | 3 | 0 | 0 | 0 | +1 | +1 | -1 | +1 | -1 |
| 1015 | 3 | 3 | 0 | 0 | 0 | +1 | +1 | -1 | -1 | +1 |

In the code division manner 4, code division is not performed on a subcarrier, and code division is not performed on a symbol. When the DMRS transmitted through the DMRS port is not subjected to code division multiplexing in frequency domain and is not subjected to code division multiplexing in time domain, parameters corresponding to the DMRS port may be shown in Table 12.

Table 12

| p | CDM group (r) | Δ | $w_f(k')$ | | | | $w_t(l')$ | | | |
|---|---|---|---|---|---|---|---|---|---|---|
| | | | k'=0 | k'=1 | ⋯ | k'=S-1 | l'=0 | l'=1 | ⋯ | l'=L-1 |
| 1000 | 0 | Predefined or configured by a network device | +1 | 0 | ⋯ | 0 | +1 | 0 | ⋯ | 0 |
| ⋯ | ⋯ | | 0 | +1 | ⋯ | 0 | +1 | 0 | ⋯ | 0 |
| 1000+X/L-1 | 0 | | 0 | 0 | ⋯ | +1 | +1 | 0 | ⋯ | 0 |
| 1000+X/L | 0 | Predefined or configured by a network device | +1 | 0 | ⋯ | 0 | 0 | +1 | ⋯ | 0 |
| ⋯ | ⋯ | | 0 | +1 | ⋯ | 0 | 0 | +1 | ⋯ | 0 |
| 1000+2X/L-1 | 0 | | 0 | 0 | ⋯ | +1 | 0 | +1 | ⋯ | 0 |
| ⋯ | ⋯ | ⋯ | ⋯ | ⋯ | ⋯ | ⋯ | ⋯ | ⋯ | ⋯ | ⋯ |
| 1000+(X/L-1)L | 0 | Predefined or configured by a network device | +1 | 0 | ⋯ | 0 | 0 | 0 | ⋯ | +1 |
| ⋯ | ⋯ | | 0 | +1 | ⋯ | 0 | 0 | 0 | ⋯ | +1 |
| 1000+X-1 | 0 | | 0 | 0 | ⋯ | +1 | 0 | 0 | ⋯ | +1 |

For meanings of the parameters in Table 12, refer to the foregoing descriptions. Details are not described herein again. In the scenario shown in Table 12, a value of X/L is an integer. In Table 12, that the column corresponding to the CDM group index r includes only 0 is merely an example. Because the DMRS is not subjected to code division multiplexing in frequency domain and is not subjected to code division multiplexing in time domain, it may be considered that there is no CDM group. In this case, it is considered by default that CDM group indexes corresponding to all DMRS ports are 0. Alternatively, it is considered by default that each DMRS port does not belong to any CDM group, that is, the column corresponding to the CDM group index r has no value. Alternatively, it is considered that each DMRS port independently belongs to a CDM group, that is, one CDM group includes only one DMRS port. In this case, each DMRS port corresponds to a different CDM group index. That is, in Table 12, values corresponding to the CDM group index r may be replaced with the following: a CDM group index r=0 corresponding to p=1000; a CDM group index r=1 corresponding to p=1001; a CDM group index r=2 corresponding to p=1002; and by analogy, a CDM group index r=X-1 corresponding to p=1000+X-1.

In Table 12, not all values of p are listed one by one in the column corresponding to p. For example, an ellipsis between 1000 and 1000+X/L-1 indicates that X/L-2 values of p are omitted, that is, 1001 to X/L-2 are omitted. Not all values of r are listed one by one in the column corresponding to r. For example, an ellipsis between 0 and 0 indicates that X/L-2 0s are omitted. In addition, for an ellipsis in the column corresponding to $w_f(k')$ and an ellipsis in the column corresponding to $w_t(l')$, refer to the descriptions in Table 3. Details are not described herein again. A person skilled in the art can determine the omitted values with reference to the context of the table.

With reference to the foregoing descriptions, assuming that X=16, S=4, and L=4 are used as an example, a specific implementation form of Table 12 may be shown in the following Table 13.

Table 13

| p | CDM group (r) | Δ | $w_f(k')$ | | | | $w_t(l')$ | | | |
|---|---|---|---|---|---|---|---|---|---|---|
| | | | k'=0 | k'=1 | ⋯ | k'=3 | l'=0 | l'=1 | ⋯ | l'=3 |
| 1001 | | 0 | 0 | +1 | 0 | 0 | +1 | 0 | 0 | 0 |

(continued)

| p | CDM group (r) | Δ | $w_f(k')$ | | | | $w_t(l')$ | | | |
|---|---|---|---|---|---|---|---|---|---|---|
| | | | k'=0\| k'=1\|···\| k'=3 | | | | l'=0\| l'=1\|···\| l'=3 | | | |
| 1002 | | 0 | 0 | 0 | +1 | 0 | +1 | 0 | 0 | 0 |
| 1003 | | 0 | 0 | 0 | 0 | +1 | +1 | 0 | 0 | 0 |
| 1004 | | 1 | +1 | 0 | 0 | 0 | 0 | +1 | 0 | 0 |
| 1005 | | 1 | 0 | +1 | 0 | 0 | 0 | +1 | 0 | 0 |
| 1006 | | 1 | 0 | 0 | +1 | 0 | ··· | +1 | 0 | 0 |
| 1007 | | 1 | 0 | 0 | 0 | +1 | 0 | +1 | 0 | 0 |
| 1008 | | 2 | +1 | 0 | 0 | 0 | 0 | 0 | +1 | 0 |
| 1009 | | 2 | 0 | +1 | 0 | 0 | 0 | 0 | +1 | 0 |
| 1010 | | 2 | 0 | 0 | +1 | 0 | 0 | 0 | +1 | 0 |
| 1011 | | 2 | 0 | 0 | 0 | +1 | 0 | 0 | +1 | 0 |
| 1012 | | 3 | +1 | 0 | 0 | 0 | 0 | 0 | 0 | +1 |
| 1013 | | 3 | 0 | +1 | 0 | 0 | 0 | 0 | 0 | +1 |
| 1014 | | 3 | 0 | 0 | +1 | 0 | 0 | 0 | 0 | +1 |
| 1015 | | 3 | 0 | 0 | 0 | +1 | 0 | 0 | 0 | +1 |

The foregoing shows merely examples of values of parameters corresponding to the DMRS port in different code division manners, and does not represent a limitation on this application.

In this application, a correspondence between a DMRS port and at least one of a CDM group index, a subcarrier offest, a frequency domain OCC code, and a time domain OCC code in different code division manners may be configured by the network device, or may be predefined. Both the first device and the second device include the correspondence. The second device needs only to indicate the DMRS port and the code division manner for the DMRS port to the first device, to determine, based on the foregoing correspondence, specific values of the CDM group index, the subcarrier offest, the frequency domain OCC code, and the time domain OCC code that correspond to the DMRS port.

Step 502: The first device sends a DMRS through the DMRS port set.

Correspondingly, the second device receives the DMRS transmitted through the DMRS port set.

The first device separately sends a DMRS through each DMRS port in the DMRS port set. The first device sends the DMRS on each DMRS port in a code division manner indicated by first information. A specific process is not described again.

For a DMRS port in the DMRS port set, a resource occupied by a DMRS transmitted by the first device through the DMRS port is determined based on a code division manner for the DMRS port and the DMRS port. Because the DMRS port has the correspondence with at least one of the CDM group index, the subcarrier offest, the frequency domain OCC code, and the time domain OCC code in different code division manners, the first device and the second device may determine, based on the DMRS port, the code division manner for the DMRS port, and the correspondence, specific values of the CDM group index, the subcarrier offest, the frequency domain OCC code, and the time domain OCC code that correspond to the DMRS port. Further, the first device and the second device may determine, based on a value of at least one of a CDM group index, a subcarrier offest, a frequency domain OCC code, and a time domain OCC code that correspond to each DMRS port, an index of a subcarrier included in frequency domain and an index of an OFDM symbol included in time domain in a resource occupied by a DMRS transmitted on each DMRS port.

The following separately describes, based on different code division manners, how to determine a resource occupied by a DMRS transmitted on a DMRS port.

In a first possible implementation, for a first DMRS port in the DMRS port set, if the code division manner corresponding to the first DMRS port is code division on different symbols on a same subcarrier, an index k of a subcarrier included in a resource occupied by the DMRS transmitted on the first DMRS port satisfies the following form:

$$k = \left(\frac{X}{L}\right)n\Delta + \frac{X}{L \times S}\Delta k' + \Delta r.$$

An index *l* of an OFDM symbol included in the resource occupied by the DMRS transmitted on the first DMRS port is equal to $l'$.

$l' = 0,1,2,..L - 1$; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; S is a length of a frequency domain OCC used for the DMRS transmitted on the first DMRS port; and k'=0, 1, ..., S-1.

In a second possible implementation, for a first DMRS port in the DMRS port set, if the code division manner corresponding to the first DMRS port is code division on a plurality of subcarriers on a plurality of symbols, an index k of a subcarrier included in a resource occupied by the DMRS transmitted on the first DMRS port satisfies the following form:

$$k = \left(\frac{X}{L}\right) n\Delta + \frac{X}{S}\Delta k' + \Delta r.$$

An index $l$ of an OFDM symbol included in the resource occupied by the DMRS transmitted on the first DMRS port is equal to $l'$.

For meanings of the foregoing parameters, refer to the first possible implementation. Details are not described herein again.

In a third possible implementation, for a first DMRS port in the DMRS port set, if the code division manner corresponding to the first DMRS port is code division neither on a subcarrier nor on a symbol or code division on different subcarriers on a same symbol, an index k of a subcarrier included in a resource occupied by the DMRS transmitted on the first DMRS port satisfies the following form:

$$k = \left(\frac{X}{L}\right) n\Delta + \Delta k'.$$

An index $l$ of an OFDM symbol included in the resource occupied by the DMRS transmitted on the first DMRS port is equal to $l'$.

For meanings of the foregoing parameters, refer to the first possible implementation. Details are not described herein again.

According to the foregoing method, the second device may indicate the code division manner for the DMRS port to the first device, so that the first device can send a DMRS in different code division manners in different scenarios, and DMRS transmission can be more flexible. This is applicable to more application scenarios. Further, in this application, the quantity X of DMRS ports that can be used to transmit a DMRS may be configured. Therefore, when an uplink capacity during communication is relatively large, a value of X may be configured to be greater than 12, so that a channel capacity of a communication system can be increased. Further, in this application, the subcarrier offset $\Delta$ may also be configured based on an actual situation. When the subcarrier offset $\Delta$ is relatively large, for example, when the subcarrier offset $\Delta$ is greater than 5, a requirement in a high-speed movement scenario can be satisfied, inter-subcarrier interference between different DMRSs can be avoided, and anti-interference performance of the DMRS can be improved.

It may be understood that, to implement the functions in the foregoing embodiments, the first device and the second device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

The following provides diagrams of structures of communication apparatuses according to embodiments of this application. These communication apparatuses may be configured to implement functions of the first device and the second device in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 6, a communication apparatus 600 includes a processing unit 610 and a communication unit 620. The communication apparatus 600 is configured to implement a function of the terminal or the base station in the method embodiment shown in FIG. 5.

When the communication apparatus 600 is configured to implement the function of the first device in the method embodiment shown in FIG. 5:

The processing unit is configured to receive indication information from a second device via the communication unit, where the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol.

The processing unit is configured to send a DMRS through the DMRS port set via the communication unit.

A resource occupied by the DMRS transmitted on each DMRS port in the DMRS port set is determined based on the code division manner for the DMRS port and the DMRS port.

When the communication apparatus 600 is configured to implement the function of the second device in the method embodiment shown in FIG. 5:

The processing unit is configured to send indication information to a first device via the communication unit, where the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol.

The processing unit is configured to receive, via the communication unit, a DMRS transmitted through the DMRS port set.

A resource occupied by the DMRS transmitted on each DMRS port in the DMRS port set is determined based on the code division manner for the DMRS port and the DMRS port.

For more detailed descriptions of the processing unit 610 and the communication unit 620, directly refer to related descriptions in the method embodiment shown in FIG. 5. Details are not described herein again.

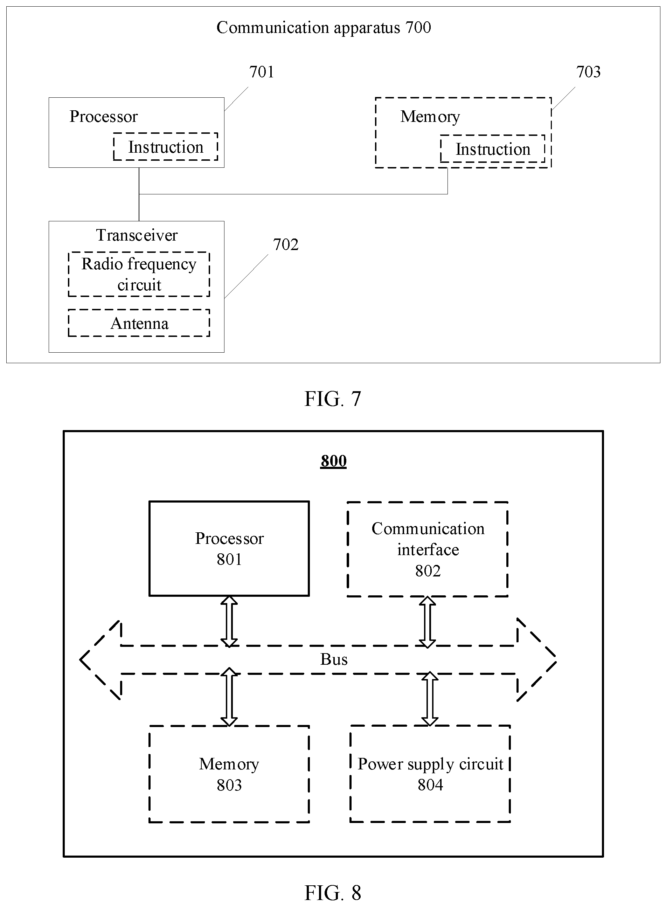

In another possible product form, the terminal device or the network device in embodiments of this application may be implemented by using a general bus architecture. For ease of description, refer to FIG. 7. FIG. 7 is a diagram of a structure of a communication apparatus 700 according to an embodiment of this application. The communication apparatus 700 includes a processor 701 and a transceiver 702. The communication apparatus 700 may be a terminal device, or a chip or a chip system in the terminal device; or the communication apparatus 700 may be a network device, or a chip or a module in the network device. FIG. 7 shows only main components of the communication apparatus 700. In addition to the processor 701 and the transceiver 702, the communication apparatus 700 may further include a memory 703 and an input/output apparatus (not shown in the figure).

Optionally, the processor 701 is mainly configured to process a communication protocol and communication data, control the entire communication apparatus, execute a software program, and process data of the software program. The memory 703 is mainly configured to store the software program and data. The transceiver 702 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

Optionally, the processor 701, the transceiver 702, and the memory 703 may be connected through a communication bus.

After the communication apparatus is powered on, the processor 701 may read the software program in the memory 703, explain and execute instructions of the software program, and process data of the software program. When data needs to be sent in a wireless manner, after performing baseband processing on the to-be-sent data, the processor 701 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 701. The processor 701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 600 may be in a form of the communication apparatus 700 shown in FIG. 7.

In an example, functions/implementation processes of the processing unit 610 in FIG. 6 may be implemented by the processor 701 in the communication apparatus 700 shown in FIG. 7 by invoking the computer-executable instructions stored in the memory 703. Functions/implementation processes of the communication unit 620 in FIG. 6 may be implemented by the transceiver 702 in the communication apparatus 700 shown in FIG. 7.

In another possible product form, the terminal device or the network device in this application may use a composition structure shown in FIG. 8, or include components shown in FIG. 8. FIG. 8 is a diagram of composition of a communication apparatus 800 according to this application.

As shown in FIG. 8, the communication apparatus 800 includes at least one processor 801. Optionally, the communication apparatus further includes a communication interface 802.

When related program instructions are executed in the at least one processor 801, the apparatus 800 may be enabled to implement the method provided in any one of the foregoing embodiments and any possible design of the method. Alternatively, the processor 801 is configured to implement, by using a logic circuit or executing code instructions, the method provided in any one of the foregoing embodiments and any possible design of the method.

The communication interface 802 may be configured to receive program instructions and transmit the program instructions to the processor. Alternatively, the communication interface 802 may be configured to perform communication interaction between the communication apparatus 800 and another communication device, for example, exchange control signaling and/or service data. For example, the communication interface 802 may be configured to receive a signal from an apparatus other than the communication apparatus 800, and transmit the signal to the processor 801, or send a signal from the processor 801 to a communication apparatus other than the communication apparatus 800.

Optionally, the communication interface 802 may be a code and/or data read/write interface circuit, or the communication interface 802 may be a signal transmission interface circuit between a communication processor and a transceiver, or may be a pin of a chip.

Optionally, the communication apparatus 800 may further include at least one memory 803, and the memory 803 may be configured to store the related program instructions and/or data that are/is required. It should be noted that the memory 803 may exist independently of the processor 801, or may be integrated with the processor 801. The memory 803 may be located inside the communication apparatus 800, or may be located outside the communication apparatus 800. This is not limited.

Optionally, the communication apparatus 800 may further include a power supply circuit 804, and the power supply circuit 804 may be configured to supply power to the processor 801. The power supply circuit 804 may be located in a same chip as the processor 801, or may be located in a chip other than a chip in which the processor 801 is located.

Optionally, the communication apparatus 800 may further include a bus, and parts of the communication apparatus 800 may be interconnected through the bus.

In some embodiments, in hardware implementation, a person skilled in the art may figure out that the communication apparatus 600 shown in FIG. 6 may be in a form of the communication apparatus 800 shown in FIG. 8.

In an example, functions/implementation processes of the processing unit 610 in FIG. 6 may be implemented by the processor 801 in the communication apparatus 800 shown in FIG. 8 by invoking the computer-executable instructions stored in the memory 803. Functions/implementation processes of the communication unit 620 in FIG. 6 may be implemented by the communication interface 802 in the communication apparatus 800 shown in FIG. 8.

It should be noted that the structure shown in FIG. 8 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium and can write information into the storage medium. Certainly, the storage medium may alternatively be a part of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

## Claims

1. A signal transmission method, comprising:

    sending indication information to a first device, wherein the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and
    receiving a DMRS transmitted through the DMRS port set, wherein
    a resource occupied by the DMRS transmitted on each DMRS port in the DMRS port set is determined based on the code division manner for the DMRS port and the DMRS port.

2. The method according to claim 1, wherein the code division manner for the DMRS port indicates a correspondence between the DMRS port and at least one of the following parameters: a code division multiplexing CDM group index, a subcarrier offest, a frequency domain orthogonal cover code OCC code, and a time domain OCC code; and
    that the resource occupied by the DMRS transmitted on each DMRS port in the DMRS port set is determined based on the code division manner for the DMRS port and the DMRS port comprises:
    the resource for the DMRS transmitted on the DMRS port is determined based on the DMRS port and the correspondence.

3. The method according to claim 2, wherein for a first DMRS port in the DMRS port set, the code division manner corresponding to the first DMRS port is code division on different symbols on a same subcarrier, and an index k of a subcarrier comprised in a resource occupied by the DMRS transmitted on the first DMRS port satisfies the following form:

$$k = \left(\frac{X}{L}\right) n\Delta + \frac{X}{L \times S}\Delta k' + \Delta r;$$

and

an index *l* of an orthogonal frequency division multiplexing OFDM symbol comprised in the resource occupied by the DMRS transmitted on the first DMRS port is equal to *l'*, wherein
*l'* = 0,1,2,..*L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; S is a length of a frequency domain OCC used for the DMRS; and k'=0, 1, ..., S-1.

4. The method according to claim 2, wherein for a first DMRS port in the DMRS port set, the code division manner corresponding to the first DMRS port is code division on a plurality of subcarriers on a plurality of symbols, and an index k of a subcarrier comprised in a resource occupied by the DMRS transmitted on the first DMRS port satisfies the following form:

$$k = \left(\frac{X}{L}\right) n\Delta + \frac{X}{S}\Delta k' + \Delta r;$$

and

an index *l* of an OFDM symbol comprised in the resource occupied by the DMRS transmitted on the first DMRS port is equal to *l'*, wherein
*l'* = 0,1,2,..*L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; S is a length of a frequency domain OCC used for the DMRS; and k'=0, 1, ..., S-1.

5. The method according to claim 2, wherein for a first DMRS port in the DMRS port set, the code division manner corresponding to the first DMRS port is code division neither on a subcarrier nor on a symbol or code division on different subcarriers on a same symbol, and an index k of a subcarrier comprised in a resource occupied by the DMRS transmitted on the first DMRS port satisfies the following form:

$$k = \left(\frac{X}{L}\right) n\Delta + \Delta k';$$

and

an index *l* of an OFDM symbol comprised in the resource occupied by the DMRS transmitted on the first DMRS port is equal to *l'*, wherein
*l'* = 0,1,2,..*L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; and k'=0, 1, ..., S-1.

6. The method according to any one of claims 3 to 5, wherein at least one of L, Δ, X, and S is predefined or configured by a network device.

7. A signal transmission method, comprising:

receiving indication information from a second device, wherein the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and
sending a DMRS through the DMRS port set, wherein
a resource occupied by the DMRS transmitted on each DMRS port in the DMRS port set is determined based on the code division manner for the DMRS port and the DMRS port.

8. The method according to claim 7, wherein the code division manner for the DMRS port indicates a correspondence between the DMRS port and at least one of the following parameters: a code division multiplexing CDM group index, a subcarrier offest, a frequency domain orthogonal cover code OCC code, and a time domain OCC code; and
that the resource occupied by the DMRS transmitted on each DMRS port in the DMRS port set is determined based on the code division manner for the DMRS port and the DMRS port comprises:
the resource for the DMRS transmitted on the DMRS port is determined based on the DMRS port and the correspondence.

9. The method according to claim 8, wherein for a first DMRS port in the DMRS port set, the code division manner corresponding to the first DMRS port is code division on different symbols on a same subcarrier, and an index k of a subcarrier comprised in a resource occupied by the DMRS transmitted on the first DMRS port satisfies the following form:

$$k = \left(\frac{X}{L}\right) n\Delta + \frac{X}{L \times S}\Delta k' + \Delta r;$$

and

an index $l$ of an orthogonal frequency division multiplexing OFDM symbol comprised in the resource occupied by the DMRS transmitted on the first DMRS port is equal to $l'$, wherein
$l'$ = 0,1,2,..$L$ - 1; n=0, 1, ...; L is a total quantity of DMRS symbols; r is an index of a code division multiplexing CDM group to which the first DMRS port belongs; $\Delta$ is the subcarrier offset; X is a maximum port quantity of DMRS ports available for transmission of the DMRS; S is a length of a frequency domain OCC used for the DMRS; and k'=0, 1, ..., S-1.

10. The method according to claim 8, wherein for a first DMRS port in the DMRS port set, the code division manner corresponding to the first DMRS port is code division on a plurality of subcarriers on a plurality of symbols, and an index k of a subcarrier comprised in a resource occupied by the DMRS transmitted on the first DMRS port satisfies the following form:

$$k = \left(\frac{X}{L}\right) n\Delta + \frac{X}{S}\Delta k' + \Delta r;$$

and

an index $l$ of an OFDM symbol comprised in the resource occupied by the DMRS transmitted on the first DMRS port is equal to $l'$, wherein
$l'$ = 0,1,2,..$L$ - 1; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; S is a length of a frequency domain OCC used for the DMRS; and k'=0, 1, ..., S-1.

11. The method according to claim 8, wherein for a first DMRS port in the DMRS port set, the code division manner corresponding to the first DMRS port is code division neither on a subcarrier nor on a symbol or code division on different subcarriers on a same symbol, and an index k of a subcarrier comprised in a resource occupied by the DMRS transmitted on the first DMRS port satisfies the following form:

$$k = \left(\frac{X}{L}\right) n\Delta + \Delta k';$$

and

an index $l$ of an OFDM symbol comprised in the resource occupied by the DMRS transmitted on the first DMRS port is equal to $l'$, wherein
$l'$ = 0,1,2,..$L$ - 1; n=0, 1, ...; L is a total quantity of DMRS symbols; r is an index of a code division multiplexing CDM

group to which the first DMRS port belongs; $\Delta$ is the subcarrier offest; X is a maximum port quantity of DMRS ports available for transmission of the DMRS; and k'=0, 1, ..., S-1.

12. The method according to any one of claims 9 to 11, wherein at least one of L, $\Delta$, X, and S is predefined or configured by a network device.

13. A communication apparatus, comprising:

a processing unit, configured to send indication information to a first device via a communication unit, wherein the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and the processing unit is configured to receive, via the communication unit, a DMRS transmitted through the DMRS port set, wherein
a resource occupied by the DMRS transmitted on each DMRS port in the DMRS port set is determined based on the code division manner for the DMRS port and the DMRS port.

14. The apparatus according to claim 13, wherein the code division manner for the DMRS port indicates a correspondence between the DMRS port and at least one of the following parameters: a code division multiplexing CDM group index, a subcarrier offest, a frequency domain orthogonal cover code OCC code, and a time domain OCC code; and that the resource occupied by the DMRS transmitted on each DMRS port in the DMRS port set is determined based on the code division manner for the DMRS port and the DMRS port comprises:
the resource for the DMRS transmitted on the DMRS port is determined based on the DMRS port and the correspondence.

15. The apparatus according to claim 14, wherein for a first DMRS port in the DMRS port set, the code division manner corresponding to the first DMRS port is code division on different symbols on a same subcarrier, and an index k of a subcarrier comprised in a resource occupied by the DMRS transmitted on the first DMRS port satisfies the following form:

$$ k = \left(\frac{X}{L}\right) n\Delta + \frac{X}{L \times S} \Delta k' + \Delta r; $$

and

an index $l$ of an orthogonal frequency division multiplexing OFDM symbol comprised in the resource occupied by the DMRS transmitted on the first DMRS port is equal to $l'$, wherein
$l' = 0,1,2,..L - 1$; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; S is a length of a frequency domain OCC used for the DMRS; and k'=0, 1, ..., S-1.

16. The apparatus according to claim 14, wherein for a first DMRS port in the DMRS port set, the code division manner corresponding to the first DMRS port is code division on a plurality of subcarriers on a plurality of symbols, and an index k of a subcarrier comprised in a resource occupied by the DMRS transmitted on the first DMRS port satisfies the following form:

$$ k = \left(\frac{X}{L}\right) n\Delta + \frac{X}{S} \Delta k' + \Delta r; \; $$

and

an index $l$ of an OFDM symbol comprised in the resource occupied by the DMRS transmitted on the first DMRS port is equal to $l'$, wherein
$l' = 0,1,2,..L - 1$; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; S is a length of a frequency domain OCC used for the DMRS; and k'=0, 1, ..., S-1.

17. The apparatus according to claim 14, wherein for a first DMRS port in the DMRS port set, the code division manner corresponding to the first DMRS port is code division neither on a subcarrier nor on a symbol or code division on different subcarriers on a same symbol, and an index k of a subcarrier comprised in a resource occupied by the DMRS transmitted on the first DMRS port satisfies the following form:

$$k = \left(\frac{X}{L}\right) n\Delta + \Delta k';$$

and

an index $l$ of an OFDM symbol comprised in the resource occupied by the DMRS transmitted on the first DMRS port is equal to $l'$, wherein
$l' = 0,1,2,..L - 1$; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; and k'=0, 1, ..., S-1.

18. The apparatus according to any one of claims 15 to 17, wherein at least one of L, $\Delta$, X, and S is predefined or configured by a network device.

19. A communication apparatus, comprising:

a processing unit, configured to receive indication information from a second device via a communication unit, wherein the indication information indicates a demodulation reference signal DMRS port set and a code division manner for each DMRS port in the DMRS port set, and the code division manner is one of the following: code division on different subcarriers on a same symbol, code division on different symbols on a same subcarrier, code division on a plurality of subcarriers on a plurality of symbols, and code division neither on a subcarrier nor on a symbol; and
the processing unit is configured to send a DMRS through the DMRS port set via the communication unit, wherein a resource occupied by the DMRS transmitted on each DMRS port in the DMRS port set is determined based on the code division manner for the DMRS port and the DMRS port.

20. The apparatus according to claim 19, wherein the code division manner for the DMRS port indicates a correspondence between the DMRS port and at least one of the following parameters: a code division multiplexing CDM group index, a subcarrier offest, a frequency domain orthogonal cover code OCC code, and a time domain OCC code; and that the resource occupied by the DMRS transmitted on each DMRS port in the DMRS port set is determined based on the code division manner for the DMRS port and the DMRS port comprises:
the resource for the DMRS transmitted on the DMRS port is determined based on the DMRS port and the correspondence.

21. The apparatus according to claim 20, wherein for a first DMRS port in the DMRS port set, the code division manner corresponding to the first DMRS port is code division on different symbols on a same subcarrier, and an index k of a subcarrier comprised in a resource occupied by the DMRS transmitted on the first DMRS port satisfies the following form:

$$k = \left(\frac{X}{L}\right) n\Delta + \frac{X}{L \times S} \Delta k' + \Delta r;$$

and

an index $l$ of an orthogonal frequency division multiplexing OFDM symbol comprised in the resource occupied by the DMRS transmitted on the first DMRS port is equal to $l'$, wherein
$l' = 0,1,2,..L - 1$; n=0, 1, ...; L is a total quantity of DMRS symbols; r is an index of a code division multiplexing CDM group to which the first DMRS port belongs; $\Delta$ is the subcarrier offest; X is a maximum port quantity of DMRS ports available for transmission of the DMRS; S is a length of a frequency domain OCC used for the DMRS; and k'=0, 1, ..., S-1.

22. The apparatus according to claim 20, wherein for a first DMRS port in the DMRS port set, the code division manner corresponding to the first DMRS port is code division on a plurality of subcarriers on a plurality of symbols, and an index k of a subcarrier comprised in a resource occupied by the DMRS transmitted on the first DMRS port satisfies the following form:

$$k = \left(\frac{X}{L}\right) n\Delta + \frac{X}{S}\Delta k' + \Delta r;$$

and

an index *l* of an OFDM symbol comprised in the resource occupied by the DMRS transmitted on the first DMRS port is equal to *l'*, wherein
*l'* = 0,1,2,..*L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; S is a length of a frequency domain OCC used for the DMRS; and k'=0, 1, ..., S-1.

23. The apparatus according to claim 20, wherein for a first DMRS port in the DMRS port set, the code division manner corresponding to the first DMRS port is code division neither on a subcarrier nor on a symbol or code division on different subcarriers on a same symbol, and an index k of a subcarrier comprised in a resource occupied by the DMRS transmitted on the first DMRS port satisfies the following form:

$$k = \left(\frac{X}{L}\right) n\Delta + \Delta k';$$

and

an index *l* of an OFDM symbol comprised in the resource occupied by the DMRS transmitted on the first DMRS port is equal to *l'*, wherein
*l'* = 0,1,2,..*L* - 1; n=0, 1, ...; L is a total quantity of DMRS symbols; r is an index of a code division multiplexing CDM group to which the first DMRS port belongs; Δ is the subcarrier offest; X is a maximum port quantity of DMRS ports available for transmission of the DMRS; and k'=0, 1, ..., S-1.

24. The apparatus according to any one of claims 21 to 23, wherein at least one of L, Δ, X, and S is predefined or configured by a network device.

25. A communication apparatus, comprising a processor coupled to a memory, wherein the processor is configured to invoke a program stored in the memory, to perform the method according to any one of claims 1 to 6, or the method according to any one of claims 7 to 12.

26. A communication apparatus, comprising a processor and a memory, wherein the memory is configured to store computer instructions, and when the communication apparatus runs, the processor executes the computer instructions stored in the memory, to perform the method according to any one of claims 1 to 6, or the method according to any one of claims 7 to 12.

27. A communication apparatus, comprising a processor and an interface circuit, wherein the processor is configured to communicate with another apparatus through the interface circuit, and perform the method according to any one of claims 1 to 6, or the method according to any one of claims 7 to 12.

28. A computer program product, wherein the computer program product comprises a computer program or instructions, and when the computer program or the instructions are run on a processor, the processor is enabled to perform the method according to any one of claims 1 to 6, or the method according to any one of claims 7 to 12.

29. A computer-readable storage medium, wherein the storage medium stores a computer program or instructions, and when the computer program or the instructions are executed by a communication apparatus, the method according to any one of claims 1 to 6 or the method according to any one of claims 7 to 12 is implemented.

FIG. 1

FIG. 2

Type 1

Single-
symbol

Double-
symbol

CDM group 0={P0, P1}

CDM group 1={P2, P3}

CDM group 0={P0, P1, P4, P5}

CDM group 1={P2, P3, P6, P7}

FIG. 3

Type 2

Single-
symbol

Double-
symbol

CDM group 0={P0, P1}

CDM group 1={P2, P3}

CDM group 2={P4, P5}

CDM group 0={P0, P1, P6, P7}

CDM group 1={P2, P3, P8, P9}

CDM group 2={P4, P5, P10, P11}

FIG. 4

```
┌──────────────────┐                    ┌──────────────────┐
│   Second device  │                    │   First device   │
└──────────────────┘                    └──────────────────┘
         │                                       │
┌────────────────────────────┐                   │
│ Step 501: The second device │                  │
│ sends indication information│                  │
│ to the first device         │                  │
└────────────────────────────┘                   │
         │      Indication information            │
         │ ─────────────────────────────────────► │
         │                                         │
         │                  ┌──────────────────────────────┐
         │                  │ Step 502: The first device   │
         │                  │ sends a DMRS through a DMRS  │
         │                  │ port set                     │
         │                  └──────────────────────────────┘
         │              DMRS                       │
         │ ◄────────────────────────────────────── │
         │                                         │
```

FIG. 5

```
┌──────────────────────────────────────────┐
│ Communication apparatus 600                │
│   ┌────────────────────────────────────┐  │
│   │      Processing unit 610           │  │
│   └────────────────────────────────────┘  │
│                    │                       │
│   ┌────────────────────────────────────┐  │
│   │    Communication unit 620          │  │
│   └────────────────────────────────────┘  │
└──────────────────────────────────────────┘
```

FIG. 6

Communication apparatus 700

701

Processor

Instruction

703

Memory

Instruction

702

Transceiver

Radio frequency
circuit

Antenna

FIG. 7

800

Processor
801

Communication
interface
802

Bus

Memory
803

Power supply circuit
804

FIG. 8

## INTERNATIONAL SEARCH REPORT

| International application No. |
|---|
| **PCT/CN2023/116320** |

**A.    CLASSIFICATION OF SUBJECT MATTER**

H04L 5/00(2006.01)i;  H04W72/23(2023.01)i

According to International Patent Classification (IPC) or to both national classification and IPC

**B.    FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, 3GPP: 索引, 端口, 码分, 方式, 方案, 模式, 子载波, 指示, 通知, DMRS, port, indication, notification, info, CDM, mode, pattern, index

**C.    DOCUMENTS CONSIDERED TO BE RELEVANT**

| Category* | Citation of document, with indication, where appropriate, of the relevant passages | Relevant to claim No. |
|---|---|---|
| A | CN 108400848 A (HUAWEI TECHNOLOGIES CO., LTD.) 14 August 2018 (2018-08-14) description, paragraphs [0025]-[0062], [0081]-[0104], and [0184]-[0198] | 1-29 |
| A | CN 116032441 A (HUAWEI TECHNOLOGIES CO., LTD.) 28 April 2023 (2023-04-28) entire document | 1-29 |
| A | CN 111357235 A (QUALCOMM INC.) 30 June 2020 (2020-06-30) entire document | 1-29 |
| A | CN 114071723 A (HUAWEI TECHNOLOGIES CO., LTD.) 18 February 2022 (2022-02-18) entire document | 1-29 |
| A | HUAWEI et al. "Signaling of DMRS ports for SU/MU-MIMO" *3GPP TSG RAN WG1 NR Ad-Hoc#3, R1-1715599*, 09 September 2017 (2017-09-09), entire document | 1-29 |

☐ Further documents are listed in the continuation of Box C.　　☑ See patent family annex.

| * | Special categories of cited documents: | |
|---|---|---|
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **26 January 2024** | **08 February 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116320**

| Patent document cited in search report | | | Publication date (day/month/year) | Patent family member(s) | | | Publication date (day/month/year) |
|---|---|---|---|---|---|---|---|
| CN | 108400848 | A | 14 August 2018 | EP | 3567786 | A1 | 13 November 2019 |
| | | | | EP | 3567786 | A4 | 15 January 2020 |
| | | | | EP | 3567786 | B1 | 01 March 2023 |
| | | | | US | 2019356442 | A1 | 21 November 2019 |
| | | | | US | 11005625 | B2 | 11 May 2021 |
| | | | | WO | 2018141195 | A1 | 09 August 2018 |
| CN | 116032441 | A | 28 April 2023 | WO | 2023071941 | A1 | 04 May 2023 |
| CN | 111357235 | A | 30 June 2020 | EP | 3711243 | A1 | 23 September 2020 |
| | | | | US | 2019159181 | A1 | 23 May 2019 |
| | | | | US | 11071098 | B2 | 20 July 2021 |
| | | | | WO | 2019099517 | A1 | 23 May 2019 |
| CN | 114071723 | A | 18 February 2022 | WO | 2022022579 | A1 | 03 February 2022 |
| | | | | KR | 20230041054 | A | 23 March 2023 |
| | | | | EP | 4187800 | A1 | 31 May 2023 |
| | | | | US | 2023171059 | A1 | 01 June 2023 |

Form PCT/ISA/210 (patent family annex) (July 2022)